# NEW EUROPEAN PATENT SPECIFICATION

(11) **EP 2 025 247 B2**
(45) Date of publication and mention of the opposition decision: **23.10.2019**
(45) Mention of the grant of the patent: 29.04.2009
(21) Application number: 07110028.3
(22) Date of filing: 12.06.2007
(51) Int. Cl.: A23L 29/212, A23L 23/00, A23L 23/10

(54) **Packaged concenrate for preparing a bouillon or broth comprising modified starch**
Abgepacktes Konzentrat zur Zubereitung von Bouillon oder Brühe enthaltend modifizierte Stärke
Concentré conditionné pour la préparation de bouillon ou consommé contenant de l'amidon modifié

(43) Date of publication of application: 18.02.2009
(73) Proprietor: Unilever N.V., 3013 AL Rotterdam (NL); Unilever PLC, London EC4Y 0DY (GB)
(72) Inventor: Achterkamp, Georg, c/o Unilever Bestfoods Deutschland GmbH, 74074 Heilbronn (DE); Latza, Stefan, c/o Unilever Bestfoods Deutschland GmbH, 74074 Heilbronn (DE)
(74) Representative: Tjon, Hon Kong Guno

(56) References cited:
- EP-A- 0 835 614
- EP-A- 0 970 620
- EP-A1- 0 400 484
- EP-A1- 1 091 658
- EP-A1- 1 145 646
- EP-A1- 1 384 727
- EP-A1- 1 962 619
- EP-A1- 2 005 838
- EP-A2- 0 970 620
- WO-A-96/02152
- WO-A-99/02047
- WO-A1-00/30460
- WO-A1-01/05251
- WO-A1-01/72148
- US-A1- 2003 044 503
- LEE K.Y. ET AL: "Effects of alpha-glucanotransferase treatment on the thermo-reversibility and freeze-thaw stabilit of a rice starch gel", CARBOHYDRATE POLYMERS, vol. 63, 2006, pages 347-354,
- PHILLIPS G.O. ET AL: "Handbook of hydrocolloids", 2000, WOODHEAD PUBLISHING LIMITED pages 41-65,
- LIGHT J.M.: "Modified food starches: why, what, where and how", CEREAL FOOD STARCHES, vol. 35, no. 11, 1990, page 21 PGS,
- Chiharu Inoue, "Experiments relating to gelled concentrates", submitted by Unilever with letter of 16 September 2011
- Experimental Report of Nestlé, dated 20 December 2013
- Experimental Report of Nestlé dated 7 February 2014
- Annex 2 submitted with the notice of opposition (a clear copy was received on 29 January 2010)
- Experimental Report from Unilever submitted with a letter of 17 September 2010
- Experimental Report of Wageningen UR (Dr G. Sala) dated 22 December 2010 and submitted with a letter of 23 February 2011
- Experimental report of Unilever dated 6 March 2014
- Experimental report of TNO dated 4 April 2014
- PICOUT D.R. ET AL: "Rheology of biopolymer solutions and gels", THE SCIENTIFIC WORLD JOURNAL, vol. 3, 2003, pages 105-121,
- Collection of data sheets of various modified starches produced by Ingredion Inc. (in particular modified starches sold as Novation TM 2560, 4300, 4600,5300,5600 and 6260, respectively)
- THOMAS J.D. ET AL: "Starches", 1999, EAGAN PRESS HANDBOOK SERIES pages 25-29-43-47,
- USDA National Nutrient Database for Standard Reference, Basic Report 01009, Cheese Cheddar, Release 27, 20 March 2015

## Description

### Field of the invention

The present invention relates to concentrates for preparing a bouillon or broth. More in particular, the invention relates to such concentrates in the form of a jelly.

### Background of the invention

Concentrates for preparing a bouillon or broth, are well known in the western and non-western cooking. For brevity, such formulations are herein all abbreviated to "concentrates for preparing a bouillon", or "bouillon concentrates".

Conventionally, bouillon concentrates comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

The most common physical formats in which such concentrates are available are powders, granulates and cubes or tablets. The powders can be prepared by mixing all ingredients in the proper proportion, optionally followed by granulating to obtain granulates using equipment known in the art. The conventional bouillon and seasoning cubes are prepared by mixing the ingredients, followed by pressing to a cube. Alternatively, cubes or tablets can be prepared by mixing all ingredients followed by extruding and cutting the extrudate. The powders and granulates are generally offered in sachets or jars, the cubes usually individually wrapped and packed in a box.

Liquid concentrates for bouillons, soups, sauces etcetera do also exist. They have the advantage that e.g. liquid extracts or concentrates of herbs, vegetables, meat etcetera can be included.

There is a desire for concentrates for preparing a bouillon or broth, which combine some advantages of liquid concentrates (e.g. allowing the use of ingredients which are not fully dried) with some advantages of dry concentrates (e.g. unit dosing).

JP 61/031,068 discloses soup concentrates for use with instant noodles, which soup concentrate is in the form of a jelly, which concentrate needs to be dilluted 5-6 times with water to yield a soup to be consumed or served with noodles. Said jellies are formed with gelatin in combination with one or more of alginate, agar and apple puree. The jellies take 3-6 minutes to dissolve. The jellies disclosed have some disadvantages.

### Summary of the invention

There is a need for (alternative) packaged concentrates for preparing a bouillon or broth, which concentrate is in the form of a (packaged) jelly, which jelly can dissolve in boiling water within reasonable time (e.g. a mass of 37 g would dissolve in 1000 ml boiling water in less than 5 minutes, preferably less than 4 minutes). It is also preferred that such jelly has a low tendency to syneresis (water separation), preferably no syneresis, and is preferably an elastic, not too rigid gel (as such will facilitate removal from its packaging; elastic and
not too rigid can best be judged by hand-feel). Also it is desired that preferably the gel is easy to manufacture (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1:50 (i.e. allows for high salt levels in the gel). Also, the product should be fairly stable in transport and storage, which is normally at ambient temperatures, but during which temperatures can rise substantially higher.

It has now been found that such may be achieved (at least in part) by a packaged concentrate for preparing a bouillon or broth, said concentrate comprising:
- 20-80% water (weight % based on total packaged concentrate),
- 10-30% (weight % based on water content of concentrate, preferably 15-28%, more preferably 20-26%) of a modified starch (e.g.a chemically or a physically modified starch),
- 15-30% (weight % based on water content of concentrate, more preferably 15-26%, most preferably 20-26%) of salt,
- 0.5-60% (weight % based on the total composition) of taste imparting components,
and wherein the concentrate has the rheology of a gel,
and wherein the concentrate has the appearance of a gel (preferably judged when taken out of the packaging).

In the present invention, the modified starch is preferably a chemically modified starch, and more preferably an acid modified starch. In case a physically modified starch is used, such is preferably a pre-gelatinised physically modified starch.

Water (as amount) is herein to be understood as the total amount of moisture present. The concentration of salt is to be calculated as (amount of salt) / (amount of salt + total moisture). The same is true for other dissolved matter, such as the modified starch gelling agent (amount modified starch) / (modified starch + total moisture).

The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way).

### Detailed description of the invention

In the formulation as set out above, it can be preferred that the concentrate comprises 20-30% (weight % based on water content of concentrate) salt, even more preferably the concentrate according to the present invention comprises 20-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable. The upper limit of solubility in water of NaCl is around 26% (at room temperature), and hence above this limit some salt crystals may occur. Hence, the amount of salt is preferably (just) below this salt saturation concentration level.

The concentrates can be more or less shape stable: it is not an easily flowable product, but it being a gelled product means it can deform (easily) under pressure. By choosing the amount of modified starch the desired rheology can be obtained. A balance will need to be found between gels which are firm (usually easy to get out of the packaging) by e.g. increasing the amount of modified starch, and dissolvability.

The amount and ratio of modified starch as required will e.g. depend on the amount of salt in the formulation, and such amounts and ratio can be determined by the person of average skill in the art of gelled food products without undue burden.

Typical amounts will be:
- at a salt level of 15%: modified starch: 10-28%, more preferably 12-26%, most preferably 15-20%,
- at a salt level of 25%: modified starch: 15-30%, more preferably 18-28%, most preferably 20%-26%,
both as wt% on the amount of water as defined above.

In the concentrates according to the invention, it is preferred that the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin. The taste-imparting components may also comprise herbs, vegetables, fruits, meat, fish, crustaceans, or particulates thereof. Due to the wet nature of the concentrates according to the invention, such taste-imparting components can be in a not completely dried state, yet the concentrate still allows unit dosing. Generally speaking such "wet" ingredients will have a higher quality or higher quality image. Also wet ingredients may be included which do not contribute to taste, but which are there for visual reasons. Such can e.g. be pieces of certain vegetables. Such may be present in the same amount as the taste-imparting components. In the above, where it says "meat" this is to be understood to comprise beef, pork, chicken (and other fowl). Preferably the amount of taste-imparting components as set out above is 1-40% (by weight on the total packed concentrate). The taste-imparting components can be in a not completely dry state (i.e. partially wet), or be completely wet, but also frozen or dry taste-imparting ingredients may be used herein.

The packaged concentrate according to the present invention may further comprising 0.5 to 30% (weight on total concentrate) of a taste enhancer selected from the group of monosodium glutamate, 5'-ribotides, organic acids, or mixtures thereof. It may also be preferred that the packaged concentrate according to the present invention further comprises 1-30%, preferably 1-15% (weight on total packaged concentrate) of emulsified or dispersed oil and/or fat. Salt can also be seen as a taste enhancer, but is herein regarded as a separate category of ingredients.

For the packaged concentrate according to the present invention, it is preferred that the total moisture content of the concentrate is 20-60% by weight (based on the total packed concentrate), preferably 40-60% by weight (based on the total packed concentrate). Also, it is preferred that the packaged concentrate according to the invention has a water activity a_{w} of 0.4 to 0.87, preferably 0.5-0.82, more preferably 0.7-0.78, most preferably 0.7-0.75. Preferably, the pH of the concentrate is between 5 and 9, preferably 5-7.

Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature.

The invention further relates to a process for the preparation of the concentrates according to the present invention. A process for the preparation may comprise the steps of mixing the ingredients with the water, filling into the packaging (e.g. blister packs or cups or tubs) and closing the packs (e.g. by a seal), whereby preferably a heating step is applied prior to, during or after filling into the packaging, for preservation purposes and/or to facilitate dissolution of ingredients and/or achieving gelation (upon cooling thereafter) of thermoset gels. Alternatively, the (heated) mixture may be poured in moulds, cooled to set. After setting to a gel, the gelled concentrate will have to be removed from the moulds and packaged. It is preferred, however, to manufacture directly into the packaging. It is preferred that the steps of mixing the ingredients with the water, filling into the packaging and closing the packaging, whereby a heating step is applied prior to, and/or during and/or after filling into the packaging.

In the above process, it is preferred that at least part of the heating stage is to a temperature of at least 60°C, more preferably at least 70°C. Also, it is preferred that the temperature of the mixture during the filling is at least 60°C , more preferably at least 70°C. When fat is used solid at room temperature, it is preferably melted first before adding to other components.

By manufacturing the packaged concentrates according to the present invention, e.g. by the process as set out above, it was found that concentrates for preparing a bouillon or broth could be obtained that are in gel form, are reasonably quick to be dispersed/dissolved (e.g. 37 g in less than 5, preferably less than 4 minutes, when immersed in 1000 ml boiling water), show a low tendency to syneresis, and can be made in
such a way that they can be used in the dillution rates usual for bouillon concentrates (e.g. 1:20-1:50).

Typical shapes in which the product according to the invention may be made comprise shapes such as is in the form of a cube, tablet, pellet, ball, briquette, dragee, cone, truncated cone, or in the shape of (the profile or projection or portrait of) an animal or part thereof (e.g. animal head). Due to the formulation and the subsequent manner of manufacturing, complex shapes are possible.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1 g -10 kg, preferably 2-250 g, more preferably 10-50 g. The portion of the concentrate according to the present invention as packaged is preferably such that the concentrate has a weight excluding packaging) of 1 g -10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

In the formulation as set out above the concentrate comprises 15-30% (weight % based on water content of concentrate) salt, more preferably the concentrate according to the present invention comprises 15-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable.

The invention further relates to the use of a concentrate as set out above, for preparing a bouillon or broth. This may be done by diluting with an aqueous liquid (e.g. water) under application of heat, in e.g. a ratio of 1:15 - 1: 100, preferably 1:20 - 1:70, more preferably 1:20 - 1:50.

The packaged concentrates described herein are preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / liter sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners. As used herein, "sweetness index" is a term used to describe the level of sweetness of the dosage form relative to sucrose. Sucrose, defined as the standard, has a sweetness index of 1. For example, the sweetness indices of several known sweet compounds are listed below: Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995". It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity a_{w} and pH of the composition may ensure such.

The invention further relates to the use of the concentrate according to the present invention and as set out above for preparing a bouillon or broth. Such use e.g. implies removing the concentrate from its packaging, and adding it to food or a dish, either during or after its preparation, optionally further applying heat and/or stirring the food or dish with such concentrate.

### Examples

Two beef bouillon concentrates were prepared. The ingredients were (in weight %):

| | Example a | Example b |
|---|---|---|
| Beef meat broth, 65° Brix | 51.4% | 50.3% |
| Water | 25.1% | 24.6% |
| Salt | 8.8% (i.e. 25.9% on water content) | 8.6% (i.e. 25.9% on water content) |
| Yeast extract | 7.3% | 7.2% |
| Beef fat | 0.9% | 0.9% |
| Modified starch (Flojel 70, ex National Starch) | 6.5% (i.e. 20.5% on water content) | 8.4% (i.e. 25.6% on water content) |

The above mixture was made in a gel by the processing described below.

### Process Description:

1. Add water to Unimix mixing apparatus
2. Add beef axtract at room temperature to water.
3. Stir and heat to 30°C.
4. Add dry ingredients (including Flogel 70) into the mixing vessel.
5. heat up to 80-90°C, and stir for about 15 minutes
6. add beef fat (at 60°C)
7. Keep at 90°C for 4 min while stirring
8. Hot filling into containers, followed by sealing and leaving to cool to room temperature

Both examples 1 a-1 b had low syneresis.

## Claims

1. Packaged concentrate for preparing a bouillon or broth, said concentrate comprising:
- 20-80% water (weight % based on total packaged concentrate),
- 10-30% (weight % based on water content of concentrate) of a modified starch,
- 15-30% (weight % based on water content of concentrate), preferably 15-26% of salt,
- 0.5-60% (weight % based on the total composition) of taste imparting components; and wherein the concentrate has the rheology of a gel.

2. Packaged concentrate according to any of claims 1, wherein the amount of modified starch is 15-28%, preferably 20-26% (weight % based on water content of concentrate).

3. Packaged concentrate according to any of claims 1-3, wherein the modified starch is a chemically modified starch, preferably an acid modified starch.

4. Packaged concentrate according to any of claims 1-, wherein the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin and/or herbs, vegetables, fruits, meat, fish, crustaceans, or particulates thereof.

5. Packaged concentrate according to any of claims 1-5, wherein the total moisture content of the concentrate is 40-60% by weight (based on the total packaged concentrate).

6. Packaged concentrate according to any of claims 1-6, wherein the concentrate has a water activity a_{w} of 0.5 to 0.87, preferably 0.7-0.78.

7. Packaged concentrate according to any of claims 1-7, further comprising 1-30%, preferably 1-15% (weight % on total packaged concentrate) of emulsified oil and/or fat.

8. Packaged concentrate according to any of claims 1-8, wherein the concentrate is packaged in a cup or tub with a seal.

9. Process for preparing a packaged concentrate for preparing a bouillon or broth, said concentrate comprising:
- 20-80% water (weight % based on total packaged concentrate),
- 10-30% (weight % based on water content of concentrate) of a modified starch,
- 15-30% (weight % based on water content of concentrate), more preferably 15-26% of salt,
- 0.5-60% (weight % based on the total composition) of taste imparting components, and wherein the concentrate has the appearance of a gel, the process comprising the steps of mixing all ingredients, filling the mixture into the packaging or moulds, closing the packaging, whereby a heating step is applied prior to, and/or during and/or after filling into the packaging or moulds.

10. Process according to claim 10-, wherein at least part of the heating step is to a temperature of at least 60°C, preferably of at least 70°C.

11. Use of a concentrate according to any of claims 1-9, for preparing a bouillon or broth.

## Patentansprüche

1. Abgepacktes Konzentrat zur Herstellung einer Bouillon oder einer Brühe, wobei das Konzentrat umfasst:
- 20-80% Wasser (Gewichts-%, bezogen auf das ganze abgepackte Konzentrat),
- 10-30% (Gewichts-%, bezogen auf den Wassergehalt des Konzentrats) einer modifizierten Stärke,
- 15-30% (Gewichts-%, bezogen auf den Wassergehalt des Konzentrats), vorzugsweise 15-26% Salz,
- 0,5-60% (Gewichts-%, bezogen auf die ganze Zusammensetzung) Geschmack-verleihender Komponenten,
- und wobei das Konzentrat die Rheologie eines Gels hat.

2. Abgepacktes Konzentrat nach Anspruch 1, wobei die Menge an modifizierter Stärke 15-28%, vorzugsweise 20-26% (Gewichts-%, bezogen auf den Wassergehalt des Konzentrats) ist.

3. Abgepacktes Konzentrat nach einem der Ansprüche 1 oder 2, wobei die modifizierte Stärke eine chemisch modifizierte Stärke, vorzugsweise eine Säuremodifizierte Stärke ist.

4. Abgepacktes Konzentrat nach einem der Ansprüche 1-3, wobei die Geschmackverleihenden Komponenten ein oder mehrere von flüssigen oder auflösbaren Extrakten oder Konzentraten von ein oder mehreren von Fleisch, Fisch, Kräutern, Früchten oder Gemüsen, und/oder Aromamittel und/oder Hefeextrakt und/oder hydrolysiertes Protein mit Gemüse-, Soja-, Fisch- oder Fleischherkunft und/oder Kräuter, Gemüse, Früchte, Fleisch, Fisch, Krustentiere oder Teilchen davon umfasst.

5. Abgepacktes Konzentrat nach einem der Ansprüche 1-4, wobei der Feuchtigkeitsgehalt des Konzentrats 40-60 Gewichts-% (bezogen auf das ganze abgepackte Konzentrat) ist.

6. Abgepacktes Konzentrat nach einem der Ansprüche 1-5, wobei das Konzentrat eine Wasseraktivität a_{w} von 0,5 bis 0,87, vorzugsweise 0,7-0,78, hat.

7. Abgepacktes Konzentrat nach einem der Ansprüche 1-6, das außerdem 1-30%, vorzugsweise 1-15% (Gewichts-%, bezogen auf das ganze abgepackte Konzentrat) emulgiertes Öl und/oder Fett umfasst.

8. Abgepacktes Konzentrat nach einem der Ansprüche 1-7, wobei das Konzentrat in einem Becher oder einem Bottich mit einer Versiegelung abgepackt ist.

9. Verfahren zur Herstellung eines abgepackten Konzentrats zur Herstellung einer Bouillon oder einer Brühe, wobei das Konzentrat umfasst:
- 20-80% Wasser (Gewichts-%, bezogen auf das ganze abgepackte Konzentrat),
- 10-30% (Gewichts-%, bezogen auf den Wassergehalt des Konzentrats) einer modifizierten Stärke,
- 15-30% (Gewichts-%, bezogen auf den Wassergehalt des Konzentrats), bevorzugter 15-26% Salz,
- 0,5-60% (Gewichts-%, bezogen auf die ganze Zusammensetzung) Geschmack-verleihende Komponenten,
und wobei das Konzentrat das Aussehen eines Gels hat, wobei das Verfahren die Schritte des Vermischens aller Ingredientien, Füllens des Gemisches in die Verpackung oder Formen, Verschließens der Verpackung umfasst, wobei ein Erhitzungsschritt vor und/oder während und/oder nach Abfüllen in die Verpackung oder Formen angewendet wird.

10. Verfahren nach Anspruch 9, wobei bei wenigstens einem Teil der Erhitzungsstufe auf eine Temperatur von wenigstens 60°C, vorzugsweise wenigstens 70°C erhitzt wird.

11. Verwendung eines Konzentrats nach einem der Ansprüche 1-8 zur Herstellung einer Bouillon oder einer Brühe.

## Revendications

1. Concentré conditionné pour la préparation d'un bouillon ou d'un potage, ledit concentré comprenant :
- 20 à 80 % d'eau (% en poids basé sur le concentré conditionné total) ;
- 10 à 30 % (% en poids basé sur la teneur en eau du concentré) d'un amidon modifié,
- 15 à 30 % (% en poids basé sur la teneur en eau du concentré), de préférence de 15 à 26 %, de sel,
- 0,5 à 60 % (% en poids basé sur la composition totale) de composants donnant le goût ;
et dans lequel le concentré a la rhéologie d'un gel.

2. Concentré conditionné selon l'une quelconque des revendications 1, dans lequel la quantité d'amidon modifié est de 15 à 28 %, de préférence de 20 à 26 % (% en poids basé sur la teneur en eau du concentré).

3. Concentré conditionné selon l'une quelconque des revendications 1 ou 2, dans lequel l'amidon modifié est un amidon modifié chimiquement, de préférence un amidon modifié par un acide.

4. Concentré conditionné selon l'une quelconque des revendications 1 à 3, dans lequel les composants donnant le goût comprennent un ou plusieurs extraits ou concentrés liquides ou pouvant être dissous d'un ou plusieurs ingrédients choisis parmi la viande, le poisson, les herbes aromatiques, les fruits ou les légumes, et/ou les arômes, et/ou un extrait de levure, et/ou une protéine hydrolysée provenant de légume, du soja, de poisson ou de viande, et/ou des herbes aromatiques, des légumes, des fruits, de la viande, du poisson, des crustacée, ou des particules de ceux-ci.

5. Concentré conditionné selon l'une quelconque des revendications 1 à 4, dans lequel la teneur en humidité totale du concentré est de 40 à 60 % en poids (basé sur le concentré conditionné total).

6. Concentré conditionné selon l'une quelconque des revendications 1 à 5, dans lequel le concentré a une activité de l'eau a_{w} de 0,5 à 0,87, de préférence de 0,7 à 0,78.

7. Concentré conditionné selon l'une quelconque des revendications 1 à 6, comprenant en outre de 1 à 30 %, de préférence de 1 à 15 % (% en poids par rapport au concentré conditionné total) d'une huile et/ou d'une matière grasse émulsifiée.

8. Concentré conditionné selon l'une quelconque des revendications 1 à 7, dans lequel le concentré est conditionné dans une coupelle ou un tube avec une fermeture étanche.

9. Procédé de préparation d'un concentré conditionné pour la préparation d'un bouillon ou d'un potage, ledit concentré comprenant :
- 20 à 80 % d'eau (% en poids basé sur le concentré conditionné total) ;
- 10 à 30 % (% en poids basé sur la teneur en eau du concentré) d'un amidon modifié,
- 15 à 30 % (% en poids basé sur la teneur en eau du concentré), de préférence de 15 à 26 %, de sel,
- 0,5 à 60 % (% en poids basé sur la composition totale) de composants donnant le goût,
et où le concentré a l'apparence d'un gel, le procédé comprenant les étapes de mélange de tous les ingrédients, chargement du mélange dans l'emballage ou les moules, fermeture de l'emballage, où une étape de chauffage est appliquée avant, et/ou pendant et/ou après le chargement dans l'emballage ou les moules.

10. Procédé selon la revendication 9, dans lequel au moins une partie de l'étape de chauffage est réalisée à une température d'au moins 60 °C, de préférence d'au moins 70 °C.

11. Utilisation d'un concentré selon l'une quelconque des revendications 1 à 8, pour la préparation d'un bouillon ou d'un potage.
